# EUROPEAN PATENT SPECIFICATION

(11) **EP 2 521 798 B1**
(45) Date of publication and mention of the grant of the patent: **26.11.2014**
(21) Application number: 10740026.9
(22) Date of filing: 02.07.2010
(51) Int. Cl.: C21D 1/04, C21D 8/10, C21D 9/08, B23K 26/00, F28F 1/10, F28F 1/12, F28F 1/16, F28F 1/26, F28F 13/18

(54) **A METHOD OF INCREASING HEAT EXCHANGE SURFACES OF ELEMENTS MADE OF METAL OR METAL ALLOYS**
VERFAHREN ZUR VERGRÖSSERUNG VON WÄRMETAUSCHERFLÄCHEN VON METALL- UND METALLEGIERUNGELEMENTEN
PROCÉDÉ D'AUGMENTATION DES SURFACES D'ÉCHANGE DE CHALEUR D'ÉLÉMENTS MÉTALLIQUES OU EN ALLIAGES MÉTALLIQUES

(30) Priority: 15.07.2009 PL 38855009; 04.12.2009 PL 38976909
(43) Date of publication of application: 14.11.2012
(73) Proprietor: Politechnika Wi Tokrzyska, 25-314 Kielce (PL)
(72) Inventor: GRABAS, Bogus aw, 31-964 Kraków (PL)
(74) Representative: Garstka, Antoni Czeslaw
(86) International application number: PCT/PL2010/000054
(87) International publication number: WO 2011/008114

(56) References cited:
- EP-A1- 0 674 965
- JP-A- 61 194 166
- PL-B1- 201 106
- US-A- 3 622 403
- US-A- 4 232 728
- US-A- 4 806 731
- US-A1- 2008 308 750

## Description

This innovation is designed to increase heat exchange by metal elements and active surfaces thereof including, in particular, heat exchange surfaces made of metal or metal alloys.

Radiators and heat exchangers constitute an important part of numerous industrial devices (e.g., electronic devices, air-conditioners, nuclear reactor cooling installations) and household appliances (e.g., PCs, TV sets). Appropriately prepared surfaces of radiators and heat exchangers remove heat from working units and transfer it to a cooling agent which comes into contact with these surfaces. Cooling agents can remove heat with or without a change of phase.

The importance of the issue of removing large streams of heat through the use of surfaces is growing due to the increasing miniaturization of industrial equipment.

Polish patent excerpt PL201106 describes a method of increasing the heat exchange surfaces of elements made of metal or metal alloys. This method involves remelting of a surface in the presence of a vapor channel created by a focused laser beam. The material is remelted by a stream of plasma or a beam of electrons. The remelting process is performed in an impulse, pulse or sustained mode. The remelting process establishes a surface and an edge; or undercuts the surface. The invention is designed to increase the heat exchange surface of elements made of metal or metal alloys through remelting of a surface in the presence of a vapor channel while the remelted element is subject to vibrations. Vibration parameters are equal at every point of the element.

The invention as defined in claim 1, allows for multiplication of a heat exchange surface in a single operation.

Due to vapor channel characteristics, remelting in this way always creates a metal bath of much larger depth than its width and length. In addition, unstable physical and chemical processes in the metal bath and vapor channel may result in a structure of highly varied remelting depth. If, for example, items with thin walls up to 1 mm thick are remelted (e.g. flow boards exchanging heat in heat exchangers), the remelting depth must be closely controlled. However, even with close control, remelting in this way can result in incidental, unintended establishment of a remelting edge or result in discontinuation of material.

This invention increases heat exchange surface of elements made of metal or metal alloys, through remelting of a surface in the presence of a vapor channel while the remelting element is subjected to vibrations. Remelting is carried out at a temperature below the ebullition temperature. It is recommended that surface is remelting using a laser beam or beam of electrons.

The invention allows for a several-fold increase of an active surface, including the heat exchange surface, as a result of a single operation. The invention facilitates performance of the process in temperatures below the ebullition temperature of the material used to manufacture the processed element, preventing creation of a vapor channel. The process is called conductive remelting or conductive welding when it is used to metalurgically bond materials. Remelting areas are relatively shallow with evenly distributed depth. This method allows, for example, the remelting of a single side of an element with thin walls without risk of accidentally creating an unwanted remelting edge or discontinuation of the material.

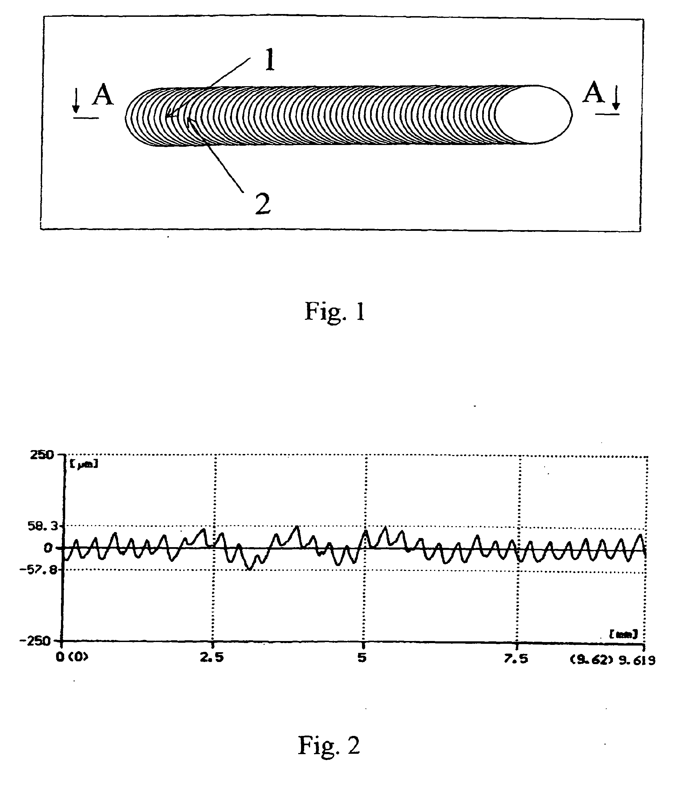

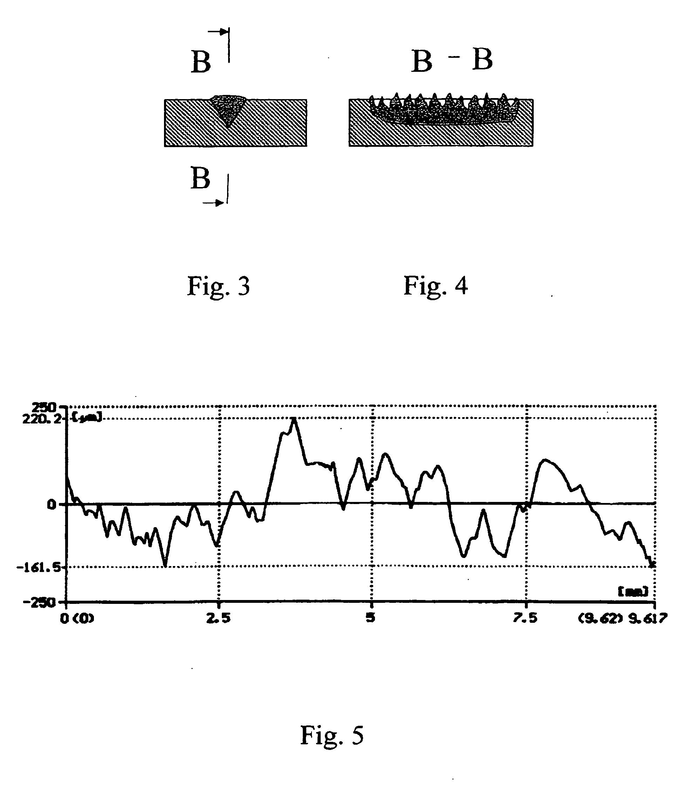

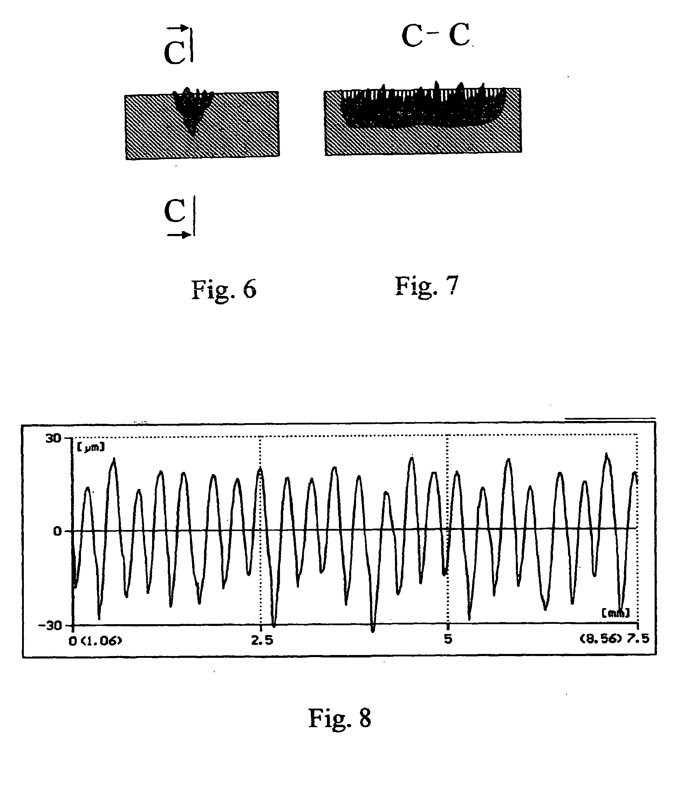

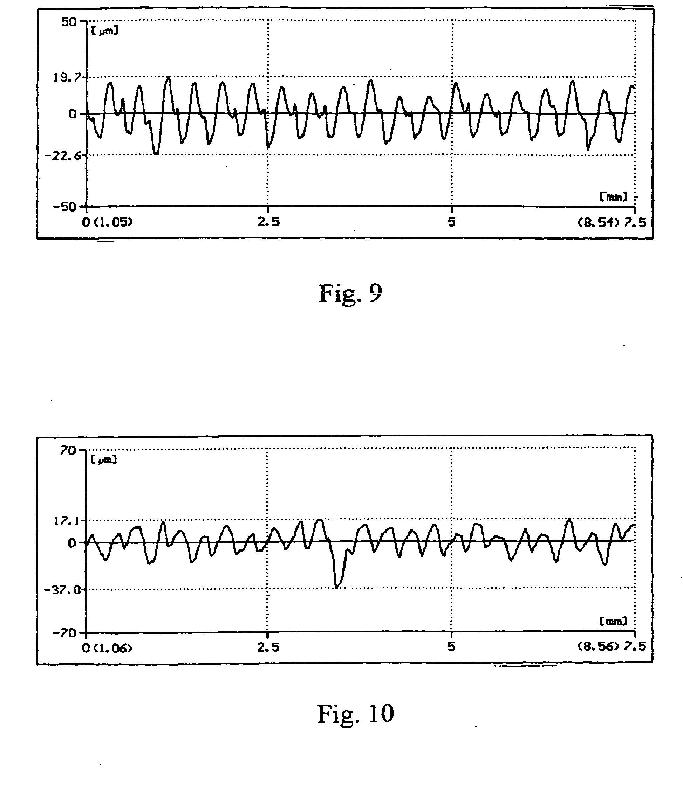

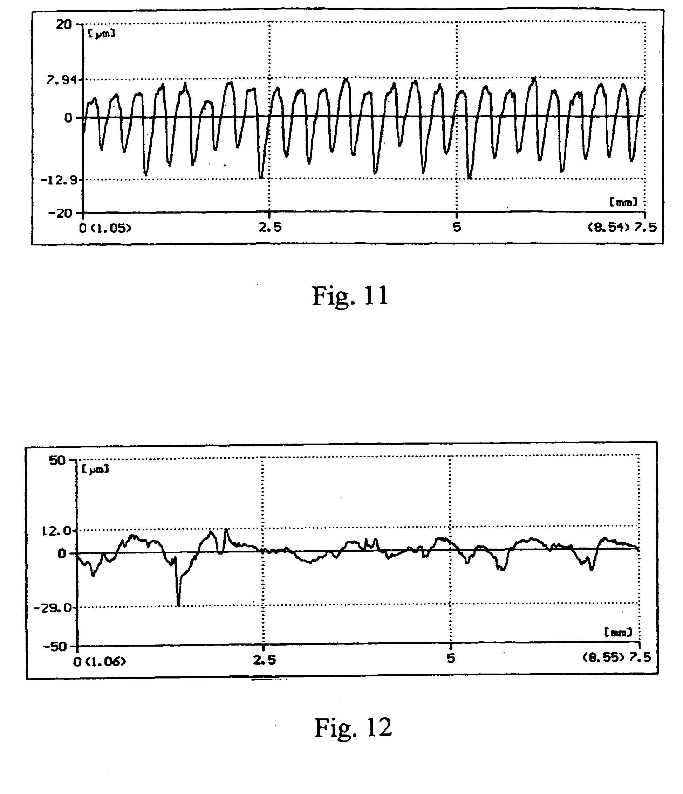

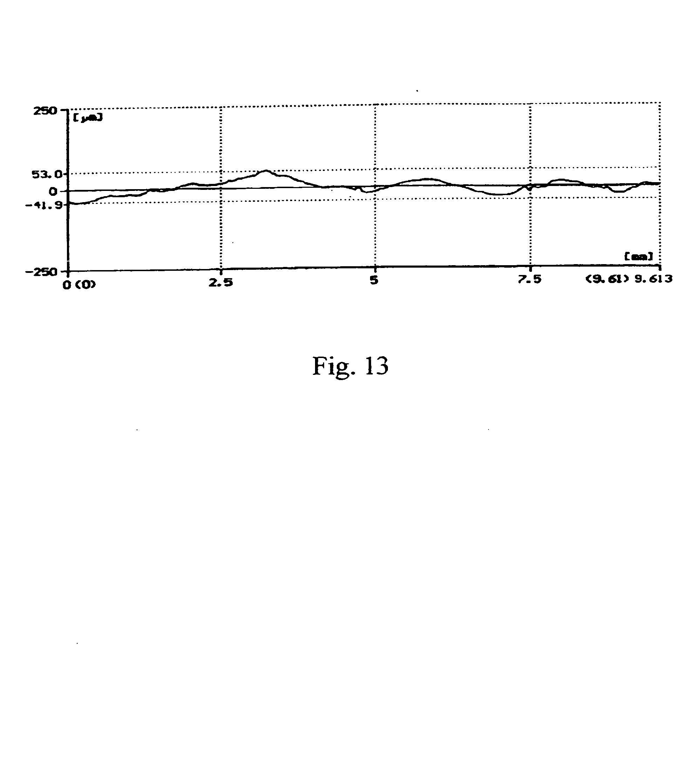

The invention is illustrated by figures which present example performance. Fig. 1 presents a top view of a surface remelted with vibration, fig. 2 - an enlarged fragment of a shape of remelting surface edge along A-A line with fig. 1, fig. 3 - a cross-section of a surface remelted with vibrations, fig. 4 - cross-section B-B with fig. 3, fig. 5 - an enlarged fragment of a remelted surface edge, fig. 6 - a cross-section of a surface remelted with vibration with different vibration parameters and laser beam characteristics than those presented in fig. 3 and 4, fig. 7 - cross-section C-C with fig. 6, fig. 8 - an enlarged fragment of a shape of remelted surface edge along A-A line on rig. 1 for beam movement speed of 2000 mm/min and vibration frequency of 105 Hz, fig. 9 - an enlarged fragment of a shape of remelted surface edge for beam movement speed of 2600 mm/min and vibration frequency of 110 Hz, fig. 10 - an enlarged fragment of a shape of remelted surface edge for beam movement speed of 2000 mm/min and vibration frequency of 110 Hz, fig. 11 - an enlarged fragment of a shape of remelted surface edge for beam movement speed of 1500 mm/min and vibration frequency of 80 Hz, and fig. 12 and fig. 13 - an enlarged fragment of a shape of remelting edge on a surface remelted without vibration.
Fig. 1 presents a general top view of a surface remelted with circular vibration in a plane parallel to the remelted surface. The result of this remelting process is characterized by a structure of consecutive elevations 1 and recesses 2 creating a shape resembling an arch.
Fig. 3 and fig. 4 present a remelted element made of C45 steel which was subject to vibration of the following parameters: frequency = 80 Hz and amplitude of approximately 3 mm. Remelting parameters: laser power 3000 W and beam movement speed of 1500 mm/min. In accordance with PN 87 - M/ - 0425/2 the remelted surface is characterized by coarseness ratings of R2 = 65.7 [mu]m and Rc = 48.3 [mu]m, respectively. The shape of the edge of the remelted surface is presented in fig. 2.
Fig. 6 and fig. 7 present a remelted element made of C45 steel which was subject to vibration of the following parameters: frequency f = 80 Hz and amplitude of approximately 3 mm, with the following remelting parameters: laser power 3000 W and beam movement speed of 1000 mm/min.

In accordance with PN 87 - M/ - 0425/2 the remelted surface is characterized by coarseness ratings of Rz = 98 [mu]m and Rc = 77.6 [mu]m, respectively. The shape of the edge of the remelted surface is presented on fig. 5.

For comparison, fig. 13 presents a remelted element made of C45 steel which was not subject to vibration. Remelting parameters: laser power 3000 W and laser beam movement speed of 1500 mm/min. In this case, in accordance with PN 87 - M/ - 0425/2, the remelted surface is characterized by coarseness ratings of R2 = 12 [mu]m and Rc = 8.77 [mu]m, respectively. An element made of OH18N9T steel was remelted under the following vibration: frequency f = 105 Hz with an amplitude of approximately 3 mm. Remelting parameters: laser power 2000 W and beam movement speed of 2000 mm/min. In accordance with PN 87 - M/ - 0425/2 the remelted surface is characterized by coarseness ratings of Rz = 44.5 [mu]m and Ra = 12.2 [mu]m, respectively. The shape of the edge of the remelted surface is presented in fig. 8.

In the second case, i.e. remelting of an element made of OH18N9T steel, the vibration parameters were as follows: frequency f = 110 Hz, amplitude of approximately 3 mm. The remelting parameters: laser power 2000 W and beam movement speed 2600 mm/min. In accordance with PN 87 - M/ - 0425/2 the remelted surface is characterized by coarseness ratings of Rz = 31.3 [mu]m and R3 = 7.89 [mu]m, respectively. The shape of the edge of the remelted surface is presented in fig. 9.

illustration fig. 10 presents the shape of an edge of remetted surface made of C45 steel subject to vibrations of the following parameters: frequency f = 110 Hz, amplitude of approximately 3 mm. Remelting parameters: laser power 2000 W and beam movement speed of 2000 mm/min. In accordance with PN 87 - M/ - 0425/2 the remelted surface is characterized by coarseness ratings of Rz = 27.2 [mu]m and Ra = 7.15 [mu]m, respectively.

Illustration fig. 11 presents the shape of an edge of remelted surface made of OH18N9T steel subject to vibrations of the following parameters: frequency f = 80 Hz, amplitude of approximately 3 mm. Remetting parameters: laser power 1500 W and beam movement speed of 1500 mm/min. In accordance with PN 87 - M/ - 0425/2 the remelted surface is characterized by coarseness ratings of Rz = 17.1 [mu]m and Ra = 4.76 [mu]m, respectively.

For comparison, fig. 12 presents a remelted element made of OH18N9T steel which was not subject to vibration. Remilting parameters: laser power 1500 W and laser beam movement speed of 1500 mm/min. In accordance with PN 87 - M/ - 0425/2 the remelted surface is characterized by coarseness ratings of Rz = 11.3 [mu]m and Ra = 3.83 [mu]m, respectively. In all cases the remelted surface edge was measured with a Talysurf 4 contact profilometer.

The coarseness parameters of remeltted surfaces which were subject to vibration were multiplied several-fold. Therefor active surfaces, including heat exchange surfaces, were increased accordingly.

## Claims

1. A method of increasing heat exchange surface of element made of metal or metal alloys through remelting of a surface in the presence of a vapor channel wherein the remelting element is subjected to vibrations.

2. A method of claim 1, wherein the remelting is carried out at a temperature below the ebullition temperature.

3. A method of claim 1, wherein a surface is remelting using a laser beam.

4. A method of claim 1, wherein a surface is remelting using a beam of electrons.

## Patentansprüche

1. Die Methode der Vergrößerung der Wärmeaustauschfläche von Elementen, erzeugt aus Metall oder aus Metalllegierungen, bei der die Umschmelzung von Oberflächen in Anwesenheit einer Dampfkapillare durchgeführt wird, ist **dadurch gekennzeichnet, dass** das verarbeitete Element bei der Umschmelzung zugleich zum Gegenstand der Vibration wird.

2. Die Methode gemäß Anspruch 1, **gekennzeichnet dadurch, dass** die Umschmelzung bei der Temperatur erfolgt, die niedriger ist als der Siedepunkt.

3. Die Methode gemäß Anspruch 1, **gekennzeichnet dadurch, dass** die Umschmelzung durch ein Laserbündel erfolgt.

4. Die Methode gemäß Anspruch 1, **gekennzeichnet dadurch, dass** die Umschmelzung durch ein Bündel von Elektronen erfolgt.

## Revendications

1. La méthode d'agrandissement de la surface d'échange de la chaleur des éléments en métaux ou en alliages métalliques par refusion de la surface en présence du canal en vapeur, **caractérisée par le fait que** pendant la refusion l'élément est soumis à la vibration.

2. La méthode selon la revendication 1, **caractérisée par le fait que** la température de refusion est inférieure de la température d'ébullition.

3. La méthode selon la revendication 1, **caractérisée par le fait que** la refusion est exécutée par le faisceau laser.

4. La méthode selon la revendication 1, **caractérisée par le fait que** la refusion est exécutée par bombardement d'électrons.
